# EUROPÄISCHE PATENTSCHRIFT

(11) **EP 1 896 316 B1**
(45) Veröffentlichungstag und Bekanntmachung des Hinweises auf die Patenterteilung: **20.12.2017**
(21) Anmeldenummer: 06753276.2
(22) Anmeldetag: 16.06.2006
(51) Int. Cl.: B62D 33/06, F16F 15/02

(54) **AUFHÄNGUNGSEINRICHTUNG MIT SCHERENPANTOGRAPH**
SUSPENSION DEVICE COMPRISING A PANTOGRAPH
DISPOSITIF DE SUSPENSION A PANTOGRAPHE

(30) Priorität: 29.06.2005 DE 102005030746
(43) Veröffentlichungstag der Anmeldung: 12.03.2008
(73) Patentinhaber: ZF Friedrichshafen AG, 88046 Friedrichshafen (DE)
(72) Erfinder: HAEUSLER, Felix, 49074 Osnabrück (DE); LOHMÜLLER, Holger, 49191 Vehrte (DE); HEIDSIECK, Knut, 32257 Bünde (DE)
(86) Internationale Anmeldenummer: PCT/DE2006/001038
(87) Internationale Veröffentlichungsnummer: WO 2007/000133

(56) Entgegenhaltungen:
- EP-A- 0 878 638
- EP-A- 0 995 924
- EP-A- 1 077 157
- WO-A-2004/018243
- WO-A1-98/57130
- GB-A- 1 372 700
- GB-A- 1 440 686
- US-A- 5 253 853
- US-A- 5 598 591
- US-A1- 2003 146 647
- US-B1- 6 168 229

## Beschreibung

Die Erfindung betrifft eine Aufhängungseinrichtung zur federnden bzw. stoßdämpfenden Aufhängung eines Massekörpers gemäß dem Oberbegriff des Patentanspruchs 1.

Aufhängungseinrichtungen der eingangs genannten Art kommen beispielsweise, jedoch keineswegs ausschließlich, bei Lastkraftwagen und ähnlichen Schwerlastfahrzeugen zum Einsatz, um die Fahrerkabine vom Chassis des Fahrzeugs zu entkoppeln.

Aus der EP 0 995 924 A2 ist eine federnde und stoßdämpfende Aufhängung einer Krankentrage eines Ambulanzfahrzeugs bekannt. Ein höhenverstellbarer Unterbau einer einem Fahrerhaus zugeordneten Liege ist in der US 5,598,591 A beschrieben. In den Dokumenten WO 98/57130 A1 und GB 1 440 686 A und GB 1 372 700 A sind Gestängeanordnungen zur federnden und teilweise auch stoßdämpfenden Aufhängung von Fahrersitzen beschrieben.

Da bei Schwerlastfahrzeugen die Federraten der Fahrwerksfedern aufgrund der hohen Fahrzeuglasten unvermeidlich relativ hoch ausfallen, werden Fahrbahnunebenheiten oder auch Schwingungen aus Achsen und Antriebsstrang zu einem erheblichen Teil noch über die Achsfederung auf das Chassis übertragen.

Um im Sinne der Ergonomie und des Arbeitsschutzes die Übertragung derartiger andauernder Stöße und Vibrationen auf das Fahrerhaus und somit auf den Arbeitsplatz des Fahrers zu minimieren, sind Fahrerhausaufhängungen entwickelt worden, bei denen das Fahrerhaus bzw. die Fahrerkabine unter Verwendung eines eigenen Aufhängungssystems am Fahrzeugchassis abgestützt ist. Solche Aufhängungssysteme für die Fahrerkabine können dank des im Vergleich zur Fahrzeugmasse viel geringeren Gewichts der Fahrerkabine mit erheblich niedrigeren Federraten und weicheren Stoßdämpfern als die Achsaufhängung ausgelegt werden.

Derartige Aufhängungseinrichtungen für Fahrerkabinen sind jedoch, insbesondere bei erhöhten Anforderungen an Querkraftabstützung bzw. Kinematik - wie beispielsweise Nick- oder Wankunterdrückung - konstruktiv verhältnismäßig aufwändig. So müssen gegebenenfalls neben den eigentlichen Feder- bzw. Dämpferelementen, ähnlich wie bei Achsaufhängungen von Kraftfahrzeugen, sogar zusätzliche Stabilisatoren vorgesehen werden.

Um zum Beispiel das unerwünschte, relative seitliche Wanken der Fahrerkabine gegenüber dem Fahrzeugchassis einzuschränken, beispielsweise bei Schräg- oder Kurvenfahrt, sind bei Aufhängungseinrichtungen nach dem Stand der Technik häufig Querstabilisatoren in Form von Torsionsstäben erforderlich, die die Einfederwege der auf die Fahrtrichtung bezogenen linken und rechten Aufhängungselemente der Fahrerkabine miteinander zu einem gewissen Grad koppeln. Um zusätzlich auch Bewegungen bzw. Schwingungen der Fahrerkabine in seitwärtiger Richtung zu unterbinden oder zu dämpfen, müssen oftmals noch zusätzliche Feder-/Dämpfereinheiten in Fahrzeugquerrichtung vorgesehen werden.

Solche bekannten Vorrichtungen zur Unterdrückung von Wankbewegungen, bzw. zur Dämpfung von Bewegungen der Fahrerkabine in anderen Richtungen als zur Hauptstoßrichtung, sind insbesondere aufgrund der hohen wirkenden Belastungen konstruktiv jedoch aufwändig. Sie verursachen damit nicht unerhebliche Kosten sowohl in Konstruktion und Produktion als auch im Rahmen der Wartung beispielsweise eines damit ausgestatteten Lastkraftwagens.

Mit diesem Hintergrund ist es Aufgabe der vorliegenden Erfindung, eine Aufhängungseinrichtung zur federnden Aufhängung eines Massekörpers zu schaffen, mit dem sich die genannten Nachteile des Standes der Technik überwinden lassen. Insbesondere soll die Aufhängungseinrichtung ermöglichen, den gewünschten Bewegungsfreiheitsgrad des Massekörpers mit einfachen Mitteln zuverlässig festzulegen und dabei gleichzeitig unerwünschte Bewegungen entlang anderer Bewegungsfreiheitsgrade bzw. Raumrichtungen wirksam zu dämpfen bzw. zu unterbinden.

Diese Aufgabe wird durch eine Aufhängungseinrichtung mit den Merkmalen des Patentanspruchs 1 gelöst. Bevorzugte Ausführungsformen sind Gegenstand der Unteransprüche.

Die erfindungsgemäße Aufhängungseinrichtung federt in an sich bekannter Weise eine Fahrerkabine eines Lastkraftwagens gegenüber einem Fahrzeugchassis.

In an sich ebenfalls bekannter Weise umfasst die Aufhängungseinrichtung mehrere zwischen Fahrerkabine und Fahrzeugchassis angeordnete Feder-/Dämpfer-Anordnungen zur Dämpfung von Stößen bzw. Schwingungen.

Erfindungsgemäß zeichnet sich die Aufhängungseinrichtung jedoch durch zumindest einen zwischen Fahrzeugchassis und Fahrerkabine und zugleich im hinteren Teil der Fahrerkabine angeordneten Scherenpantographen zur Reduktion der Anzahl an Bewegungsfreiheitsgraden der Fahrerkabine relativ zum Fahrzeugchassis aus. Der Scherenpantograph ist dabei nach Art einer Hubscherenanordnung dergestalt zwischen Unterbau und Massekörper angeordnet, dass der Massekörper sich entlang des gewünschten Bewegungsfreiheitsgrads - bzw. entlang der vorgesehenen Raumrichtung - relativ zum Unterbau bewegen kann, während die Bewegung des Massekörpers entlang zumindest einer weiteren Raumrichtung gedämpft oder unterbunden wird. Mit anderen Worten dient der Scherenpantograph also zur Reduzierung der Anzahl an Bewegungsfreiheitsgraden des Massekörpers relativ zum Unterbau.

Die erfindungsgemäße Verbindung zwischen Massekörper und Unterbau mittels eines Scherenpantographen ist insbesondere insofern vorteilhaft, als so auf konstruktiv einfache und robuste Weise eine Geradführung des Massekörpers relativ zum Unterbau erreicht werden kann. Gleichzeitig werden jedoch beispielsweise die sog. Wank- oder Nickbewegungen - mit anderen Worten also unerwünschte Rotationsbewegungen des Massekörpers um zumindest eine seiner Hauptachsen - wirkungsvoll unterdrückt. Dasselbe gilt für unerwünschte, beispielsweise seitliche Bewegungen des Massekörpers senkrecht zur Hauptstoßrichtung, bzw. allgemein für senkrecht zur Richtung der Geradführung des Massekörpers verlaufende Bewegungen.

Die Erfindung wird dabei zunächst einmal unabhängig davon verwirklicht, wie der Scherenpantograph konstruktiv konkret ausgeführt und zwischen Unterbau und Massekörper angeordnet ist. Gemäß einer bevorzugten Ausführungsform der Erfindung ist jedoch zumindest eines der Loslager des Scherenpantographen als Schwinghebel ausgebildet.

Scherenpantographen, bzw. die zum Beispiel von Hebebühnen bekannten Hubscherenanordnungen, weisen im allgemeinen sowohl im Bereich des Unterbaus als auch im Bereich der mit der Hubschere beispielsweise gestützten Plattform jeweils eine Festlageranordnung und eine Loslageranordnung auf. Dabei ist die Loslageranordnung bei den bekannten Hubscherenanordnungen in Form eines Gleitsteins ausgeführt, der in einer Geradführung, beispielsweise in einem Langloch oder in einer Schiene, gleitend geführt ist.

Diese Ausführung der Loslagerung ist jedoch konstruktiv aufwändig, gewichtsmäßig schwer sowie wegen der gleitenden Geradführung wartungsintensiv und verschleißanfällig. Wie jedoch die Anmelderin herausgefunden hat, lassen sich diese Nachteile durch Ausbildung zumindest eines und vorzugsweise beider Loslager des Scherenpantographen jeweils in Form eines Schwinghebels eliminieren. Der Schwinghebel besitzt gegenüber der gleitenden Führung mit Gleitstein und Schiene den Vorteil, dass der zugehörige Arm des Scherenpantographen ohne Einsatz einer Linearführung, sondern vielmehr lediglich mit konstruktiv einfach beherrschbaren Schwenklagern mit der zugehörigen Anlenkung an Massekörper bzw. Unterbau verbunden werden kann.

Auf diese Weise wird somit eine sowohl robuste als auch kostengünstig ausführbare, weitgehend wartungsfreie und zudem nahezu spielfreie Anbindung zwischen Unterbau, Scherenpantograph und Massekörper erreicht. Die Ausbildung der Loslageranordnungen als Schwinghebel hilft zudem bei der Einsparung von Gewicht und Bauraum.

Zur Verwirklichung der Erfindung ist es zunächst einmal unerheblich, wie die Lagerpunkte des Scherenpantographen konstruktiv ausgeführt sind, solange die zu erwartenden Belastungen aufgenommen werden können. Gemäß einer bevorzugten Ausführungsform der Erfindung ist jedoch zumindest eine der Lageranordnungen des Scherenpantographen bzw. der Aufhängungseinrichtung als Elastomerlager ausgebildet.

Die Ausbildung einer oder mehrerer Lageranordnungen, oder sogar aller Lageranordnungen des Scherenpantographen als Elastomerlager besitzt insbesondere den Vorteil, dass die Aufhängungseinrichtung auf diese Weise noch robuster ausgeführt werden kann, wobei sich gleichzeitig der Wartungsbedarf auf ein Minimum reduzieren lässt. Zudem ergibt sich so auch eine zusätzliche Vibrationsdämpfung im Mikrobereich, die sowohl die Lager- und Materialbelastungen verringert, als auch - insbesondere im Fall der Anwendung im Fahrzeugbereich - den mit der Aufhängungseinrichtung erreichbaren Komfort zusätzlich verbessert.

Schließlich kann durch den Einsatz von Elastomerlagern auch verhindert werden, dass es unter bestimmten Einbaubedingungen zu einer Selbstsperrung des Scherenpantographen kommt, beispielsweise aufgrund der Cosinus-Komponente der Schwenkbewegung der als Schwinghebel ausgeführten Loslager des Scherenpantographen.

Gemäß einer weiteren Ausführungsform der Erfindung ist vorgesehen, dass die Aufhängungseinrichtung nicht nur einen, sondern mehrere Scherenpantographen umfasst. Damit lässt sich - zunächst einmal unabhängig von der konkreten konstruktiven Ausführung und Anordnung der Scherenpantographen - eine weiter verbesserte Führungsgenauigkeit, höhere Beanspruchbarkeit sowie eine Erhöhung der Sicherheit, insbesondere bei der Anwendung im Fahrzeugbau erzielen.

Dabei ist nach einer weiteren, besonders bevorzugten Ausführungsform die durch die Gelenke eines der Scherenpantographen aufgespannte Ebene senkrecht zu der durch die Gelenke eines weiteren Scherenpantographen aufgespannten Ebene angeordnet. Dies bedeutet mit anderen Worten, dass zumindest zwei Scherenpantographen eingesetzt werden, die in zueinander senkrecht stehenden Ebenen angeordnet sind. Auf diese Weise lässt sich der Bewegungsfreiheitsgrad des Massekörpers mit besonders großer Sicherheit und Genauigkeit auf Bewegungen entlang lediglich einer Raumrichtung beschränken, während jegliche Bewegungen entlang der beiden anderen Raumrichtungen ausgeschlossen sind. Auch unerwünschte Rotationen des Massekörpers um zumindest zwei Achsen eines kartesischen Koordinatensystems, also beispielsweise sowohl Wankbewegungen als auch Nickbewegungen einer Fahrzeugkabine, lassen sich auf diese Weise zuverlässig unterbinden.

Erfindungsgemäß umfasst die Aufhängungseinrichtung ferner zumindest einen Lenker, zum Beispiel einen Längslenker oder einen Panhardstab. Dabei ist der Lenker senkrecht zu der durch die Gelenke eines Scherenpantographen aufgespannten Ebene angeordnet.

Auf diese Weise wird eine noch bessere Abstützung derjenigen Kräfte erreicht, die senkrecht zu der von dem Scherenpantographen aufgespannten Ebene, bzw. senkrecht zur Hauptbewegungsrichtung des Massekörpers wirken. Im Fall der Anwendung im Kraftfahrzeugbereich bedeutet dies beispielsweise eine verbesserte Abstützung der im Crashfall auftretenden großen Längskräfte durch entsprechend längs angeordnete Lenker. Aber auch die Übertragung der - parallel zu den Drehachsen der Lagerung des zusätzlichen Lenkers wirkenden - Querkräfte zwischen Massekörper und Unterbau lässt sich auf diese Weise unterstützen.

Eine weitere, besonders bevorzugte Ausführungsform der Erfindung sieht vor, dass die gesamte Aufhängungseinrichtung als modulares Baukastensystem ausgebildet ist. Dies bedeutet mit anderen Worten, dass die wesentlichen Bestandteile der Aufhängungseinrichtung, insbesondere die Lagerungen und Stäbe des Scherenpantographen, als untereinander universell kombinierbare Standardbauteile ausgeführt sind. Auf diese Weise lässt sich durch Auswahl der jeweils passenden Standardbauteile besonders einfach und kostengünstig eine Aufhängungseinrichtung mit unterschiedlichsten Abmessungen realisieren, und die Aufhängungseinrichtung kann ohne nennenswerte konstruktive Modifikationen beispielsweise bei unterschiedlichsten Fahrzeuggrößen oder Fahrzeugkategorien, oder auch zum Ausgleich etwa auftretender Anschlusstoleranzen, zum Einsatz gebracht werden.

Im Folgenden wird die Erfindung anhand lediglich Ausführungsbeispiele darstellender Zeichnungen näher erläutert. Dabei zeigt:
- **Fig. 1**: in schematischer Darstellung eine Ausführungsform einer Aufhängungsanordnung gemäß der vorliegenden Erfindung in isometrischer Ansicht; und
- **Fig. 2**: in einer **Fig. 1** entsprechenden Darstellung den Scherenpantographen der Aufhängungsanordnung gemäß **Fig. 1** in der Seitenansicht.

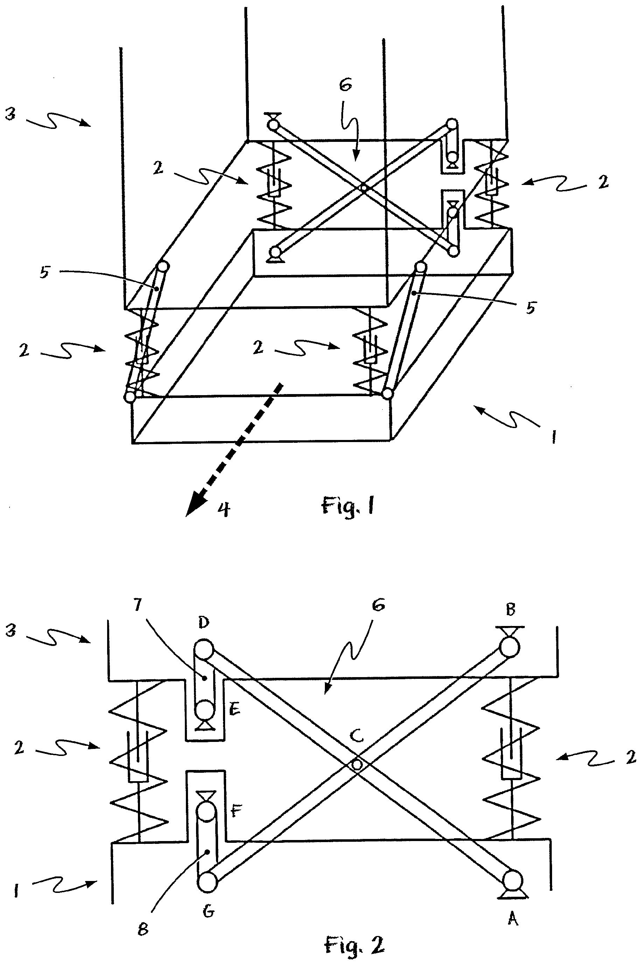

**Fig. 1** zeigt in höchst schematischer, isometrischer Darstellung eine Ausführungsform für eine Aufhängungsanordnung gemäß der vorliegenden Erfindung. Man erkennt zunächst einen Unterbau 1 und einen schematisch angedeuteten, mit dem Unterbau 1 über eine Feder-/Dämpfer-Anordnung 2 verbundenen Massekörper 3. Dabei soll der Unterbau den vorderen Bereich des Chassis 1 eines Lastkraftwagens darstellen, während der angedeutete Massekörper für das Fahrerhaus 3 des Lastkraftwagens steht. Die Fahrtrichtung 4 verläuft dabei schräg aus der Zeichenebene heraus.

Man erkennt in **Fig. 1****,** dass die Verbindung zwischen Fahrerhaus 3 und Chassis 1 außer vier Feder-/Dämpfer-Anordnungen 2 zwei im vorderen Bereich des Fahrerhauses angeordnete Längslenker 5, sowie einen im hinteren Bereich des Fahrerhauses angeordneten Scherenpantographen 6 umfasst. Die lediglich höchst schematisch angedeuteten Längslenker 5, die in der Realität nicht schräg nach oben, sondern vielmehr im Wesentlichen waagerecht verlaufen, dienen dabei primär der Längskraftabstützung zwischen Fahrerhaus 3 und Chassis 1. Insbesondere die bei einem etwaigen Crash auftretenden hohen Längskräfte lassen sich dank der Längslenker 5 sicher kontrollieren bzw. zwischen Chassis 1 und Führerhaus 3 übertragen. Die Längslenker 5 können jedoch auch so ausgeführt werden, dass sie zusätzlich eine gewisse Querstabilisierung im vorderen Bereich der Fahrerkabine 3 ermöglichen.

Im hinteren Bereich des Fahrerhauses 3 ist der das Fahrerhaus 3 und das Chassis 1 verbindende Scherenpantograph 6 erkennbar, den **Fig. 2** nochmals vergrößert in der rückwärtigen Ansicht - bezogen auf das Fahrerhaus 3 - zeigt. Man erkennt in **Fig. 2****,** dass der Scherenpantograph 6 sieben Gelenke umfasst, die mit den Buchstaben *A, B, C, D, E, F* und *G* bezeichnet sind. Von den Gelenken *A* bis *G* sind *A* und *F* rahmenfest, wohingegen *B* und *E* fahrerhausfest sind.

Aufgrund der besonderen Kinematik des Scherenpantographen gemäß **Fig. 2** werden dabei die seitlichen Wankbewegungen des Fahrerhauses 3 relativ zum Chassis 1 über die Gelenke *A, B, E* und *F* abgestützt, durch welche Fahrerhaus 3 und Chassis 1 in erster Näherung stets parallel zueinander gehalten werden. Ein relatives Wanken des Fahrerhauses 3 relativ zum Chassis 1 findet somit nicht statt.

Erst bei größeren vertikalen Auslenkungen zwischen Fahrerhaus 3 und Chassis 1 kommt dabei die mit der Cosinuskomponente der Schwenkbewegung der Schwinghebel 7 und 8 zusammenhängende Änderung des vertikalen Abstands der Lagerpunkte *D* und *E* bzw. *G* und *F* zum Tragen und bewirkt eine geringfügige, dafür aber definierte relative Wankbewegung zwischen Fahrerhaus 3 und Chassis 1. Dies ist praktisch aber ohne Bedeutung, da die vertikale Relativbewegung zwischen Fahrerhaus 3 und Chassis 1 bei einer Fahrerhauslagerung sich stets nur im Bereich weniger Zentimeter bis maximal Dezimeter bewegt. Die Größenordnung der Änderung des vertikalen Abstands der Lagerpunkte *D* und *E* bzw. *G* und *F* ist somit vernachlässigbar.

Auftretende statische oder dynamische Querkräfte jedoch werden unmittelbar über die Gelenke *A, C* und *B* zwischen Fahrerhaus 3 und Chassis 1 übertragen, so dass - jedenfalls im Bereich des Scherenpantographen 6, bei der vorliegenden Ausführungsform also im hinteren Bereich des Fahrerhauses 3 - keine zusätzliche seitliche Führung oder Abstützung des Fahrerhauses 1 erforderlich ist. Die Vertikalbewegung zwischen Fahrerhaus 3 und Chassis 1 jedoch bleibt aufgrund der freien vertikalen Beweglichkeit der Gelenkpunkte *B* und *E* gegenüber den Gelenkpunkten *A* und *F* vollständig unbehindert, und wird wie vorgesehen lediglich durch die Feder-/Dämpfer-Anordnungen 2 aufgenommen bzw. abgefangen.

Im Ergebnis wird somit deutlich, dass dank der Erfindung eine Aufhängungseinrichtung zur federnden Aufhängung eines Massekörpers, insbesondere einer Lkw-Fahrerkabine geschaffen wird, mit der sich der vorgesehene Bewegungsfreiheitsgrad des Massekörpers auf konstruktiv robuste Weise zuverlässig festlegen lässt, wobei gleichzeitig unerwünschte Bewegungen entlang anderer Raumrichtungen wirksam gedämpft bzw. unterbunden werden. Die Erfindung ermöglicht somit auf wartungsarme und kostengünstige Weise die sichere und komfortable federnde Aufhängung insbesondere von Fahrzeugkabinen und dergleichen.

Die Erfindung leistet damit einen wichtigen Beitrag hinsichtlich der Verbesserung der Sicherheit und Zuverlässigkeit insbesondere im Bereich der Lkw-Technologie; dies speziell im Fall von Anwendungen, bei denen Wirtschaftlichkeitserwägungen und Kostensenkung - bei gleichzeitig hohen Qualitätsanforderungen - eine Rolle spielen.

### Bezugszeichenliste

- 1: Unterbau, Chassis
- 2: Feder-/Dämpfer-Anordnung
- 3: Massekörper, Fahrerhaus
- 4: Fahrtrichtung
- 5: Längslenker
- 6: Scherenpantograph
- 7, 8: Schwinghebel
- *A* bis *G*: Gelenke

## Patentansprüche

1. Federnde Aufhängungseinrichtung einer Fahrerkabine (3) eines Lastkraftwagens relativ zu einem Fahrzeugchassis (1), die Aufhängungseinrichtung aufweisend mehrere zwischen Fahrerkabine (3) und Fahrzeugchassis (1) angeordnete Feder-und-Dämpfer-Anordnungen (2) zur Dämpfung von Stößen bzw. Schwingungen,
**dadurch gekennzeichnet, dass** die Aufhängungseinrichtung zumindest einen zwischen Fahrzeugchassis (1) und Fahrerkabine (3) und zugleich im hinteren Teil der Fahrerkabine (3) angeordneten Scherenpantographen (6) zur Reduzierung der Anzahl an Bewegungsfreiheitsgraden der Fahrerkabine (3) relativ zum Fahrzeugchassis (1) und zumindest einen senkrecht zu der durch die Gelenke (A - G) eines Scherenpantographen (6) aufgespannten Ebene angeordneten, der Längskraftabstützung zwischen Fahrerkabine (3) und Fahrzeugchassis (1) dienenden Lenker (5) umfasst.

2. Aufhängungseinrichtung nach Anspruch 1,
**dadurch gekennzeichnet, dass** zumindest eine der Loslageranordnungen (*DE, FG*) des Scherenpantographen als Schwinghebel (7, 8) ausgebildet ist.

3. Aufhängungseinrichtung nach Anspruch 1 oder 2,
**dadurch gekennzeichnet, dass** zumindest eine der Lageranordnungen (*A* - *G*) des Scherenpantographen als Elastomerlager ausgebildet ist.

4. Aufhängungseinrichtung nach einem der Ansprüche 1 bis 3,
**dadurch gekennzeichnet, dass** die Aufhängungseinrichtung mehrere Scherenpantographen (6) umfasst.

5. Aufhängungseinrichtung nach Anspruch 4,
**dadurch gekennzeichnet, dass** die durch die Gelenke (*A* - *G*) eines Scherenpantographen (6) aufgespannte Ebene senkrecht zu der durch die Gelenke (*A* - *G*) eines weiteren Scherenpantographen aufgespannten Ebene angeordnet ist.

6. Aufhängungseinrichtung nach einem der Ansprüche 1 bis 5,
**dadurch gekennzeichnet, dass** die Längslenker (5) im Wesentlichen waagerecht verlaufen.

7. Aufhängungseinrichtung nach einem der Ansprüche 1 bis 6,
**dadurch gekennzeichnet, dass** die Aufhängungseinrichtung als Stäbe und Gelenke umfassendes modulares Baukastensystem ausgebildet ist.

## Claims

1. Sprung suspension device of a driver's cab (3) of a truck for providing suspension relative to a vehicle chassis (1), the suspension device comprising a plurality of spring and damper arrangements (2), arranged between driver's cab (3) and vehicle chassis (1), for damping shocks and/or vibrations,
**characterized in that** the suspension device comprises at least one pantograph (6), arranged between vehicle chassis (1) and driver's cab (3) and at the same time in the rear part of the driver's cab (3), for reducing the number of degrees of freedom of movement of the driver's cab (3) relative to the vehicle chassis (1), and at least one connecting arm (5) which is arranged perpendicularly with respect to the plane spanned by the joints (A-G) of a pantograph (6) and serves to support the longitudinal force between the driver's cab (3) and the vehicle chassis (1).

2. Suspension device according to Claim 1,
**characterized in that** at least one of the freely moving bearing arrangements (*DE, FG*) of the pantograph is embodied as a rocker arm (7, 8).

3. Suspension device according to Claim 1 or 2,
**characterized in that** at least one of the bearing arrangements (A-G) of the pantograph is embodied as an elastomer bearing.

4. Suspension device according to one of Claims 1 to 3,
**characterized in that** the suspension device comprises a plurality of pantographs (6).

5. Suspension device according to Claim 4,
**characterized in that** the plane which is spanned by the joints (A-G) of a pantograph (6) is arranged perpendicularly with respect to the plane which is spanned by the joints (A-G) of a further pantograph.

6. Suspension device according to one of Claims 1 to 5,
**characterized in that** the longitudinal connecting arms (5) extend essentially horizontally.

7. Suspension device according to one of Claims 1 to 6,
**characterized in that** the suspension device is embodied as a modular kit system comprising rods and joints.

## Revendications

1. Dispositif de suspension à ressorts d'une cabine de conducteur (3) d'un camion par rapport à un châssis de véhicule (1), le dispositif de suspension présentant plusieurs agencements de ressort et d'amortisseur (2) disposés entre la cabine de conducteur (3) et le châssis de véhicule (1), pour l'amortissement de chocs ou de vibrations, **caractérisé en ce que** le dispositif de suspension comprend au moins un pantographe (6) disposé entre le châssis de véhicule (1) et la cabine de conducteur (3) et en même temps dans la partie arrière de la cabine de conducteur (3) pour la réduction du nombre de degrés de liberté de mouvement de la cabine de conducteur (3) par rapport au châssis de véhicule (1) et au moins une bielle (5) disposée perpendiculairement au plan défini par les articulations (A - G) d'un pantographe (6) et utilisée pour assurer le support des forces longitudinales entre la cabine de conducteur (3) et le châssis de véhicule (1) .

2. Dispositif de suspension selon la revendication 1, **caractérisé en ce qu'**au moins un des agencements de palier libre (DE - FG) du pantographe est réalisé sous la forme d'un levier oscillant (7, 8).

3. Dispositif de suspension selon la revendication 1 ou 2, **caractérisé en ce qu'**au moins un des agencements de palier (A-G) du pantographe est réalisé sous la forme d'un palier en élastomère.

4. Dispositif de suspension selon l'une quelconque des revendications 1 à 3, **caractérisé en ce que** le dispositif de suspension comprend plusieurs pantographes (6).

5. Dispositif de suspension selon la revendication 4, **caractérisé en ce que** le plan défini par les articulations (A - G) d'un pantographe (6) est disposé perpendiculairement au plan défini par les articulations (A - G) d'un autre pantographe.

6. Dispositif de suspension selon l'une quelconque des revendications 1 à 5, **caractérisé en ce que** les bielles longitudinales (5) sont essentiellement horizontales.

7. Dispositif de suspension selon l'une quelconque des revendications 1 à 6, **caractérisé en ce que** le dispositif de suspension est réalisé sous la forme d'un système de construction modulaire comprenant des barres et des articulations.
